# EUROPEAN PATENT SPECIFICATION

(11) **EP 1 204 293 B1**
(45) Date of publication and mention of the grant of the patent: **17.09.2008**
(21) Application number: 01125172.5
(22) Date of filing: 23.10.2001
(51) Int. Cl.: H04R 1/08

(54) **Speech communication apparatus**
Sprachübertragungsanordnung
Dispositif de communication de la parole

(30) Priority: 06.11.2000 JP 2000337033; 06.11.2000 JP 2000337034; 10.11.2000 JP 2000343519
(43) Date of publication of application: 08.05.2002
(73) Proprietor: HONDA GIKEN KOGYO KABUSHIKI KAISHA, Minato-ku, Tokyo (JP)
(72) Inventor: Tabata, Hajime, Wako-shi, Saitama (JP); Miyamaru, Yukio, Wako-shi, Saitama (JP)
(74) Representative: Liska, Horst

(56) References cited:
- US-A- 4 220 929
- US-A- 4 723 277
- US-A- 4 754 486
- US-A- 4 771 472
- US-A- 4 977 590

## Description

The present invention relates to a helmet with a speech communication apparatus, and more particularly to a helmet with a speech communication apparatus including a speech communication microphone and a speaker fitted in the helmet and fixedly disposed in the vicinity of the mouth and the ear of an individual wearing the helmet, respectively.

A helmet with a speech communication apparatus according to the preamble part of claim 1 is known from US-A-4 754 486.

US-A-4 723 277 discloses a telephone set including a speech communication microphone, a speaker and a communication unit for amplifying a reception signal, the speech communication microphone and the speaker being fixedly disposed in the telephone set. The telephone set comprises amplifying means for amplifying an input signal and outputting the input signal so amplified, and control means for controlling the gain of the amplifying means such that a reproduced sound of an unstable signal is reduced to a predetermined level when an input terminal of the control means receives a power control signal from an anti-Larsen device.

US-A-4 771 472 discloses an apparatus for improving the intelligibility of voice signals in conditions where there is an excessive input signal to the microphone. The apparatus uses a slow action automatic gain control circuit which matches dynamic range of the microphone with dynamic range of the following communication channel, and a fast action automatic gain control circuit in parallel with the first circuit, that reshapes puff noise into plosive, fricative and affricative speech component signals that produced the puff noise.

US-A-4 220 929 discloses an apparatus for audio-signal conditioning, comprising means for sensing the input signal and for producing, in response thereto, a control signal having an amplitude as a function of the amplitude of the input signal, amplifier means for amplifying the input signal, and means for controlling the gain of the amplifier means as a function of the amplitude of the control signals.

US-A-4 977 590 discloses circuitry suitable in a telecommunication system, wherein the level of the mute can be set at different levels through a switch, and wherein the mute function is activated after a predetermined time the input signal remains below a predetermined level.

A further communication system (an intercom) is known in which in order to establish speech communication between a rider or a driver of a riding type vehicle such as a motorcycle and a passenger of said riding type vehicle a speaker or a rider or driver of another vehicle, a speech communication microphone and an electric contact between them are mounted in a helmet for the driver, the passenger and the driver of another vehicle, respectively, and a communication unit mounted on the vehicle side is connected to the helmet for the driver, the passenger and the driver of another vehicle, respectively.

In the conventional communication system described above, since the speech communication microphone is normally fixed in the vicinity of the mouth of the driver when the helmet is worn by the driver, the speech communication microphone cannot be moved away from the vicinity of the mouth even when the driver feels like sneezing or coughing. This causes a problem that physiological noise generated when the driver sneezes or coughs is allowed to be entirely detected by the speech communication microphone for transmission to the passenger or the driver of another vehicle who is in communication with the driver, thereby making his or her speech communication partner feel uncomfortable.

Although there exists no prior art developed to solve the technical problem described above, as a common technology for attenuating an excessive input which offends the ear JP-A-5-183363 discloses a technology in which a signal exceeding allowable positive or negative maximum values is converted into a code of a noise level at which noise cannot be substantially picked up by converting an input signal into a digital signal for data processing.

In the above prior art, the input signal is converted into the digital signal, the digital signal resulting from the conversion is data processed to determine whether or not the input signal is excessive, and if it is determined to be excessive the excessive input signal must be converted into a string of codes. Thus, there has been caused a problem that the construction of the prior art speech communication system becomes complicated.

An object of the present invention is to provide a helmet with a speech communication apparatus which can solve the problem inherent in the prior art and in which a speech communication microphone and a speaker are fixedly disposed in the vicinity of the mouth and the ear of an individual, respectively, the speech communication apparatus being constructed such that uncomfortable physiological noise such as resulting from sneezing, coughing or clearing the throat is prevented from being transmitted to a speech communication partner.

This object is achieved by a helmet with a speech communication apparatus according to claim 1 or 2.

There is provided a helmet with a speech communication apparatus including a speech communication microphone, a speaker and a communication unit for amplifying an output signal from the speech communication microphone, the speech communication microphone and the speaker being fixedly disposed in the vicinity of the mouth and the ear of an individual wearing the helmet, respectively, the communication unit comprising: an amplifying means for amplifying an input signal and outputting the input signal so amplified, and a control means for controlling the gain of the amplifying means in response to an excessive input signal, wherein the control means controls the gain of the amplifying means such that a reproduced sound of an excessive input signal is reduced substantially to a mute level only for a predetermined period of time when the excessive input signal is detected.

According to the characteristic of the invention described above, a speech communication apparatus can be realized with a simple construction in which uncomfortable physiological noise such as resulting from sneezing or coughing is prevented from being transmitted to a speech communication partner.

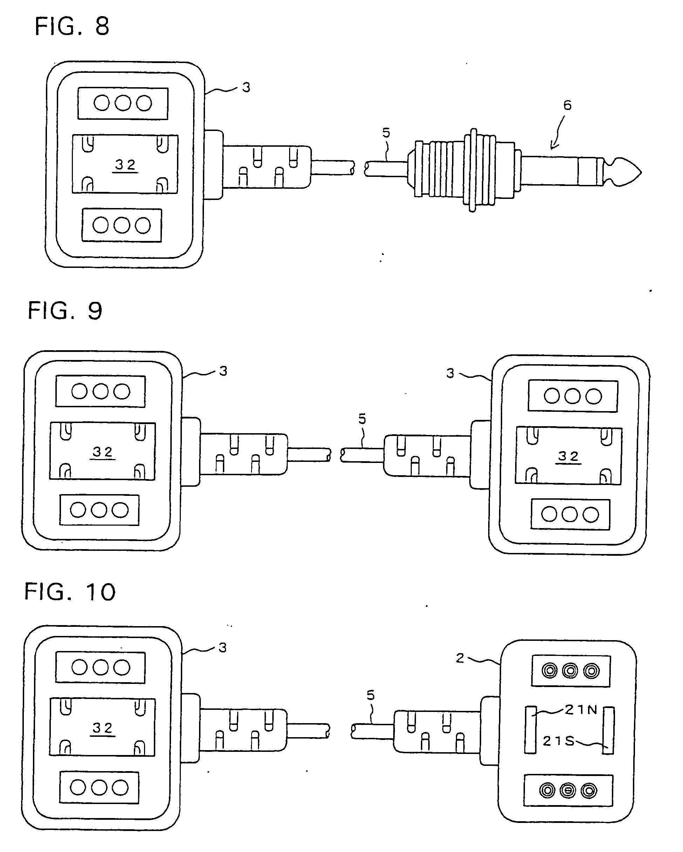

Preferred embodiments of the present invention will be described in detail below with reference to the appended drawings. It is illustrated in:
Fig. 1
   A diagram showing the construction of a vehicle communication system to which the invention is applied.
Fig. 2
   A rear view of a helmet.
Fig. 3
   A block diagram of a communication unit.
Fig. 4
   A diagram illustrating signal waveforms of a main part of the communication unit.
Fig. 5
   A diagram showing the construction of another vehicle communication system to which the invention is applied.
Fig. 6
   A diagram showing the construction of a further vehicle communication system.
Fig. 7
   A diagram showing a method for disposing the communication unit on a vehicle.
Fig. 8
   A diagram showing one embodiment (Part 1) of a connecting cord for connecting the communication unit with the helmet.
Fig. 9
   A diagram showing the one embodiment (Part 2) of a connecting cord for connecting the communication unit with the helmet.
Fig. 10
   A diagram showing the one embodiment (Part 3) of a connecting cord for connecting the communication unit with the helmet.
Fig. 11
   A diagram showing a method for accommodating the connecting cord shown in Fig. 9.
Fig. 12
   A diagram showing a method for prolonging the connecting cord shown in Fig. 9.
Fig. 13
   A typical view illustrating a communication method by a vehicle radio communication system to which the invention is applied.
Fig. 14
   A block diagram of the radio communication system.
Fig. 15
   A side view showing a first method for attaching the ratio communication unit to the helmet.
Fig. 16
   A rear view of the helmet with the radio communication unit not being attached thereto.
Fig. 17
   A plan view of a main surface of the radio communication unit which faces the helmet.
Fig. 18
   A side view showing a second method for attaching the radio communication unit to the helmet.

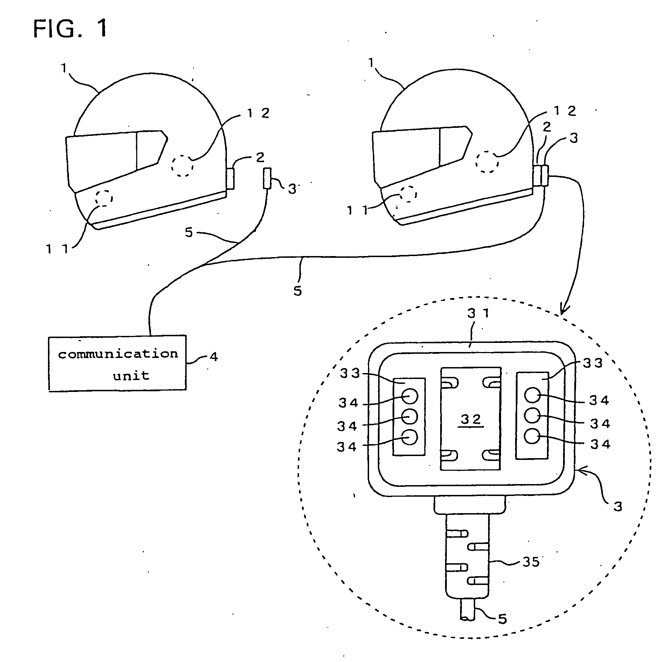

Fig. 1 is a diagram showing the construction of a vehicle communication system to which the invention is applied, and here an embodiment will be described in which communication occurs between two people riding the same vehicle, namely, a rider or driver and his or her passenger.

A microphone 11 and a speaker 12 are fitted in a helmet 1 that is to be worn by the driver and his or her passenger, respectively, and an external contact between the microphone 11 and the speaker 12 is exposed to the outside at a magnet side socket 2 which is one of sockets of a magnet connector. A magnetic material side socket 3 which is the other socket of the magnet connector is attached to a distal end of each cord 5 extending from a communication unit 4. The helmet 1 and the cord 5 are electrically and mechanically connected to each other by means of the magnet connector comprising the magnet side socket 2 and the magnetic material side socket 3 which constitute a pair.

As shown in an enlarged fashion within a circle indicated by a broken line in the same figure, formed on a connecting surface of the magnetic material side socket 3 is an annular rib 31 provided along the periphery thereof in such a manner as to erect therefrom, a magnetic material plate 32 fixedly attached to a bottom portion and a plurality of electrodes 34 exposed on an upper surface of a land-like portion 33 provided on the bottom portion in such a manner as to rise therefrom, and no source for generating lines of magnetic force is provided on the connecting surface. The cord 5 is drawn from the magnetic material side socket 3 via a shock absorbing bush 34.

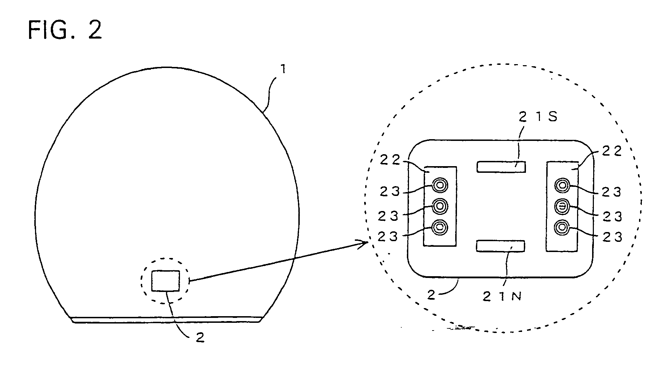

Fig. 2 is a rear view of the helmet 1 with the magnetic material side socket 3 of the cord 5 not being attached to the helmet 1, and a connecting surface of the magnet side socket 2 of the magnet connector is exposed deep inside the socket 2. As is shown in an enlarged fashion within a circle indicated by a broken line on the right hand side in the same figure, formed on the connecting surface of the magnet side socket 2 are an S pole iron piece 21S, an N pole iron piece 21N and a plurality of electrodes 23 exposed at a bottom portion within a depression 22. When the magnet side socket 2 is connected to the magnetic material side socket 3 the respective electrodes 23, 34 are brought into contact with each other to thereby secure an electric connection therebetween.

The communication unit 4 is detachably fixed to a suitable location on the vehicle. Alternatively, the communication unit 4 is attached to the body of either of the riding people or is accommodated in the clothes thereof. When the riding people get off the vehicle and the communication unit is not in use, the cord can be removed from the helmet 1 to be wrapped around the communication unit 4 for carrying.

As is described above, in this embodiment, of the pair of magnet connectors for connecting the helmet 1 with the cord 5 the magnet side socket 2 is fixed to the helmet 1 side, whereas the magnetic material side socket 3 having no source for generating lines of magnetic force is provided at the one end of the cord 5. Therefore, when removing the cord 5 from the helmet 1 and wrapping it around the communication unit 4 for carrying even if the cord so wrapped around the communication unit is put in the pocket or bag together with a magnetic card or a magnetic disc, no magnetic information loaded on the card or disc is affected.

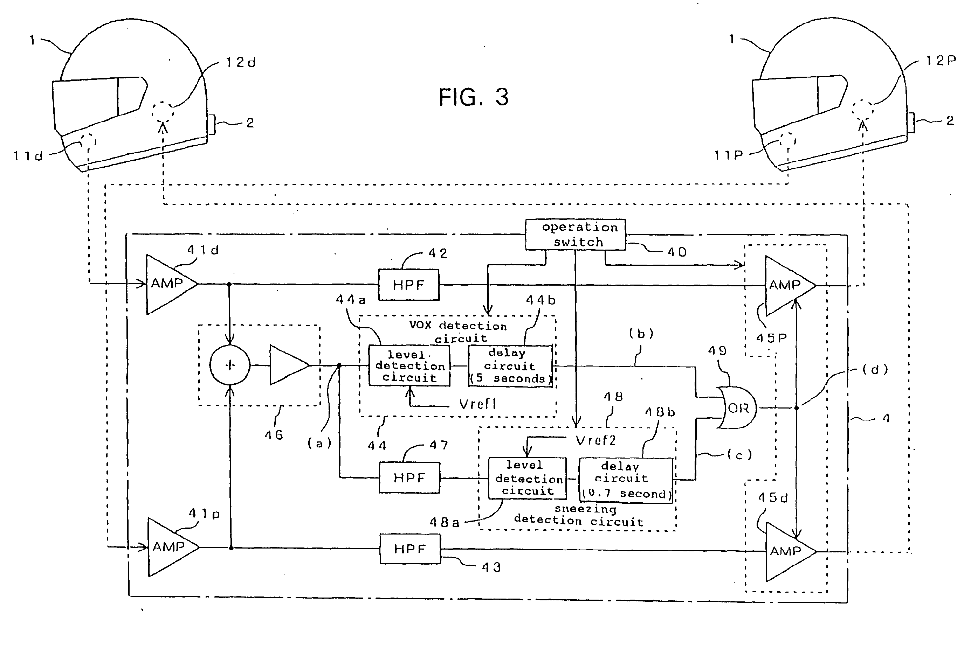

Fig. 3 is a block diagram showing the construction of a main part of the communication unit 4, and like reference numerals to those described previously denote like or equivalent portions to those described above. The communication unit 4 according to the invention is provided with a function to prevent the transmission of a relatively loud physiological noise such as sneeze or cough to a speech communication partner.

Microphone amplifiers 41d, 41p amplify voice signals detected at microphones 11d, 11p, respectively, which are mounted in the helmets of the driver and the passenger and output the signals so amplified. Low frequency constituents of an output signal from the microphone amplifier 4 are removed or attenuated by a high pass filter (HPL) 42 and the output signal so treated is then inputted into a speaker amplifier 45p. Similarly, low frequency constituents of an output signal from the microphone amplifier 41p are removed or attenuated with a high pass filter 43 and the signal so treated is then inputted into a speaker amplifier 45d.

The respective speaker amplifiers 45p, 45d are provided with a muting terminal, and when a control signal of "H" level enters the muting terminal an output signal therefrom is attenuated or cut off.

An amplifier 46 (a mixer amplifier) provided with a mixer function synthesizes and amplifies output signals from the microphone amplifies 41d, 41p and outputs the output signals so synthesized and amplified to a VOX detection circuit 44 and then to a sneezing detection circuit 48 via an HPL 47.

The VOX detection circuit 44 includes a level detection circuit 44a and a delay circuit 44b (5 seconds in this embodiment) , whereby a signal equal to or exceeding a reference value Vref1 is detected by the level detection circuit 44a the VOX detection circuit 44 makes an output signal become an "L" level and maintains the "L" level for 5 seconds even after no signal equal to or exceeding the reference value Verf1 is detected.

The reference value Vref1 is set to a value approximate to a minimum value of a voice signal that would be detected if speech communication takes place between the riding people. Consequently, it can be determined that speech communication is taking place in case the output from the mixer amplifier 46 exceeds the reference value Vrref1, whereas if case the output falls below the reference value Vref1 it is determined that the speech communication is not taking place.

The sneezing detection circuit 48 includes a level detection circuit 48a and a delay circuit 48b (in this embodiment, 0.7 second ) , whereby when a signal equal to or above a reference value Vref2 is detected by the level detection circuit 48a the sneezing detection circuit 48 makes an output signal become an "H" level only for 0.7 second. The period of time of 0.7 second is a time that is predicted to be a maximum value for a period of time during which a physiological noise resulting from a sneeze or a cough continues. The reference value Vref2 is set to a value in the vicinity of a minimum value for a signal level at which an input signal resulting from a physiological noise such as sneezing or coughing noise can be detected. Consequently, in case an output from the mixer amplifier 46 exceeds the reference value Vref2 it can be determined that an input signal inputted then is a signal attributed to the physiological noise such as sneezing and coughing.

An OR circuit 49 outputs a theoretical sum of an output signal from the VOX detection circuit 44 and an output from the sneezing detection circuit 48 to muting terminals of the respective speaker amplifiers 45p, 45d as a control signal. An operating switch 40 includes switches for varying the reference values Vref1 and Vref2, the delay times of the delay circuits 44b, 48b and the gains of the speaker amplifiers 45p, 45d.

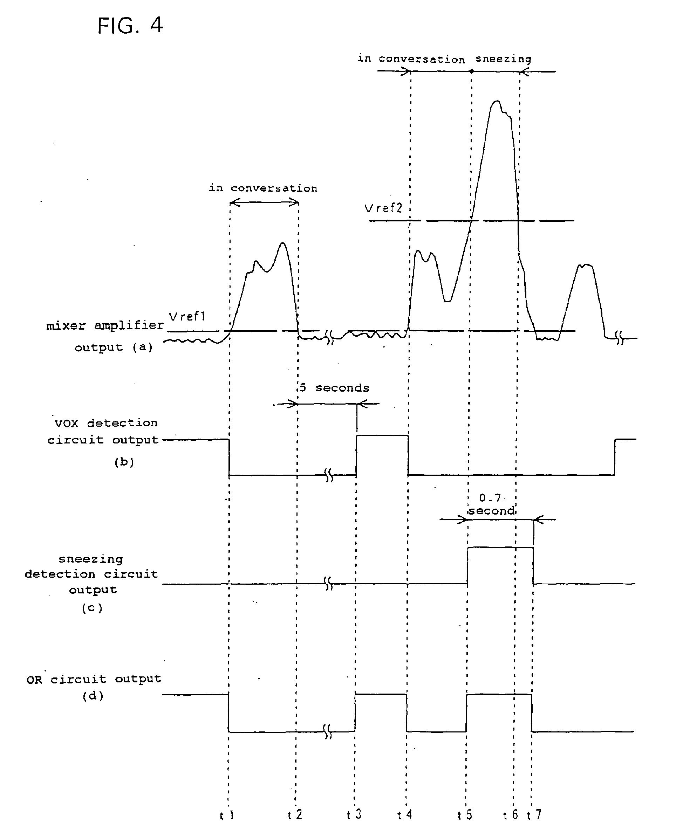

Fig. 4 is a diagram showing signal waveforms of the main part of the communication unit 4. Since a voice signal outputted from the mixer amplifier 46 stays below the reference value Vref1 until time t1, the output from the VOX detection circuit 46 is maintained at the "H" level. As a result, the output of the OR circuit 49 becomes the "H" level and the respective speaker amplifiers 45p, 45d become mute, whereby the power consumption of the speaker amplifiers 45p, 45d is largely suppressed.

Thereafter, when conversation takes place between the riding people and the output of the mixer amplifier 46 increases and exceeds the reference value Vref1 at time t1 the output of the VOX detection circuit 44 turns to the "L" level. Since the output of the sneezing detection circuit 48 still stays at the "L" level as this occurs, the output of the OR circuit 49 becomes the "L" level. As a result, the muting facilities of the respective speaker amplifies 45p, 45d are cancelled, voice signals outputted from the respective HPF 42, 43 are amplified by the respective speaker amplifiers 45p, 45d and are outputted from the speakers 12p, 12d.

Thereafter, the conversation stops at time t2 and the output of the mixer amplifier 46 becomes below the reference value Vref1, and this state continues for 5 seconds. Then, the output of the VOX detection circuit turns to the "H" level at time t3. As a result, the output of the OR circuit 49 becomes the "H" level, whereby the respect speaker amplifiers 45p, 45d reactivates the muting facilities thereof.

Thereafter, when conversation starts again and the output of the mixer amplifier 46 exceeds the reference value Vref1 at time t4 the output of the VOX detection circuit 44 turns to the "L" level. As this occurs, since the output of the sneezing detection circuit 48 still remains at the "L" level, the output of the OR circuit 49 becomes the "L" level. As a result, since the muting facilities of the respective speaker amplifiers 45p, 45d are cancelled, voice is outputted from the respective speakers 12p, 12d.

When either of the riding people sneezes during the conversation and the output of the mixer amplifier 46 exceeds the reference value Vref2 at time t5 the output of the sneezing detection circuit 48 turns to the "H" level and the delay circuit 48b starts a 0.7second timer. As a result, the output of the OR circuit becomes the "H" level only for 0.7 second and the muting facilities of the respective speaker amplifiers 45p, 45d are activated, whereby there is no case where the sneezing noise is reproduced by the speakers.

The physiological noise such as sneezing or coughing is deadened within a short period of time, and the output of the mixer amplifier 46 decreases below the reference value Vref2 at time t6. Consequently, in this embodiment assuming that the physiological noise is completely attenuated at time t7 at which the 0.7-second timer of the delay circuit 48b times out, the output of the sneezing detection circuit 48 is returned to the "L" level. On the other hand, in case there is no disruption to the conversation for 5 or more seconds from time t4 to time t7, since the output of the VOX detection circuit 44 is maintained, the output of the OR circuit becomes again the "L" level, whereby speech communication becomes possible.

According to the embodiment, since sneezing or coughing is determined by the signal level thereof and the muting facility of the mixer amplifier is activated for the predetermined period of time (0.7 second in this embodiment) when sneezing or coughing is detected, the physiological noise such as sneezing or coughing noise can be prevented from being reproduced from the speaker of the speech communication partner with an extremely simple construction.

Note that while the muting period by the sneezing detection circuit 48 is set at 0.7 second in this embodiment, in case the apparatus is made to deal with continuous sneezing, it is desirable to set the muting period at on the order of 5 seconds. The result of observation by the inventor shows that since sneezing tends to stop within 5 seconds, it is desirable that the muting period is set to a range from 0.7 to 5 seconds both included.

In addition, although the volume and continuity time of sneezing or coughing vary from person to person, in this embodiment, the operating switch 40 is provided so as to vary the reference value Vref2 and the set time of the delay circuit 48b. Consequently, in case the reference value Vref2 and the delay time are adjusted depending upon the physical characteristics of individuals, there can be solved a problem that speech communication is disrupted due to the muting period being prolonged more than needed, or, on the contrary, a problem that physiological noise cannot be cut off sufficiently due to the muting period being too short.

Furthermore, in the aforesaid embodiment, while the sneezing detection circuit 48 is described as comparing the input signal with the reference value Vref2 so as to determine that a signal exceeding the reference value Vref2 is a signal responding to sneezing or coughing, the invention is not limited thereto but the sneezing detection circuit 48 may be constituted by a differential circuit so as to detect the varying factor of the input signal, so that a drastic input signal such as a signal the varying factor of whose rise exceeds a predetermined reference varying factor is determined as an input signal responding to sneezing or coughing.

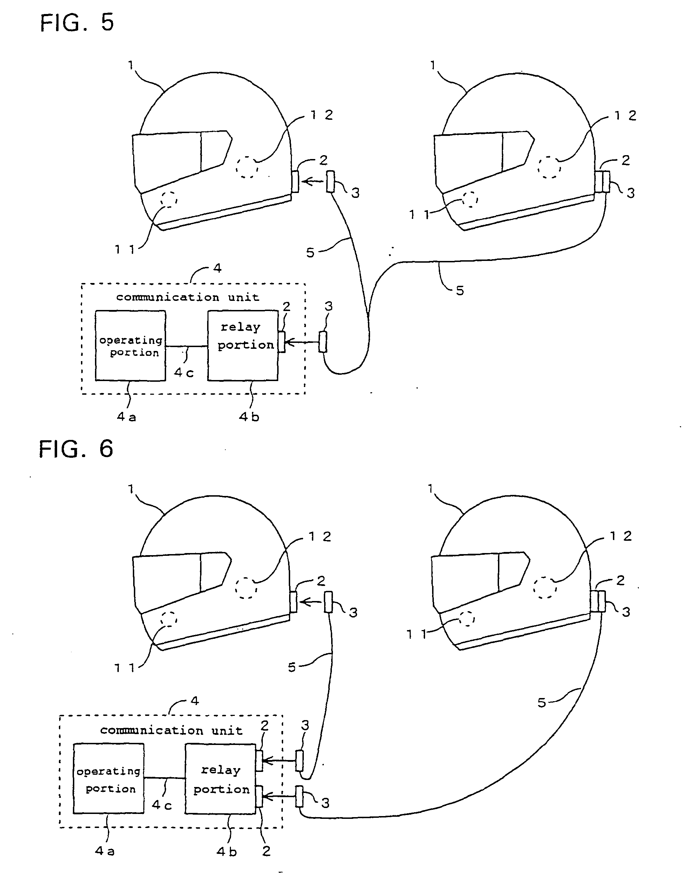

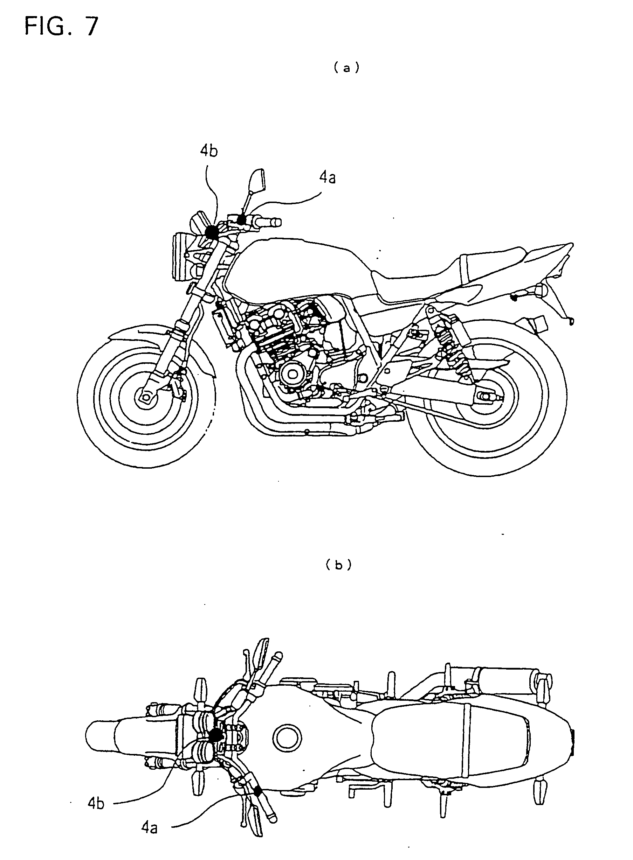

Incidentally, in the above embodiment, while the communication unit 4 is described as being easily attached to or detached from the vehicle body, the communication unit 4 may be constructed as a fixed type of communication unit which is fixed to the vehicle. However, in a case where the communication unit 4 is fixed to the vehicle, in order to improve the operability thereof, it is desirable that the communication unit is fixed in the vicinity of handgrips of the handlebar. However, since the displacement amount becomes large at a location in the vicinity of the handgrip when the handlebar is operated to steer the vehicle, there may be a risk that the connecting cord 5 interferes with the operation of the communication unit when the handlebar is operated to steer the vehicle. Consequently, in case the vehicle fixed type communication unit 4 is used, as shown in Figs. 5 and 6, desirably the communication unit 4 is divided into an operating portion 4a which includes the operating switch 40 and a relay portion 4b, the two portions so divided are then connected to each other with a relay cable, and as shown in Figs. 7A, 7B, the operating portion 4a is disposed in the vicinity of the handgrip, whereas the relay portion 4b is fixed to a central portion or the like of the handlebar where the displace amount is small when the handlebar is operated to steer the vehicle.

Furthermore, in case the communication unit 4 is constructed as a fixed type, as shown in Figs. 5 and 6, the cord 5 also needs to be constructed detachably from the communication unit 4. In this case, too, as shown in Fig. 8, in consideration of a possibility that the cord 5 is put in the pocket or bag, the magnetic material side socket 3 is provided on the helmet side end of the cord 5, whereas a plug 6 is provided on the communication unit 4 side end thereof, whereby the socket and the plug are connected to each other when the plug 6 is inserted into a jack (not shown) provided on the communication unit 4.

However, since the riding people of a motorcycle tend to wear gloves in many occasions, it is desirable that the connection of the communication unit 4 and the cord 5 is constructed to be effected with the gloved hands. However, with the connection by the plug 6 and the jack, since the plug 6 needs to be inserted into a small hole in the jack, the connection is difficult to be implemented with gloved hands.

Furthermore, with the connection by the plug 6 and the jack, when a load is applied between the communication unit 4 and the cord 5 so that the unit and the cord are taken apart from each other, in case the load application direction is deviated from the plug insertion direction, a large magnitude of load is inevitably applied to the plug 6 and the jack when the unit and the cord are taken apart from each other.

In order to solve a problem like this, as shown in Fig. 9, a magnetic material side socket 3 is provided on the communication unit 4 side end of the cord 5, similarly to the helmet side, so that the magnetic material side socket 3 may be connected to the magnet side socket 2 provided on the communication unit 4. Even with this construction, since there exists no magnet side socket 2 which constitutes a source for generating lines of magnetic force on the cord 5, even if the cord 5 is put in the pocket or bag together with a magnetic card, things accommodated in the pocket or bag such as a magnetic cart, there is no risk that the things are magnetically affected.

Moreover, in a case where a construction as shown in Fig. 6 is adopted in which the respective helmets 1 are connected to the communication unit 4 independently with the cords 5, as shown in Fig. 10, the magnet side socket 2 and the magnetic material side socket 3 may be provided at the respective ends of the cords 5 so that the magnet side sockets 2 are connected to the magnetic material side sockets 3 provided on the communication unit 4 side.

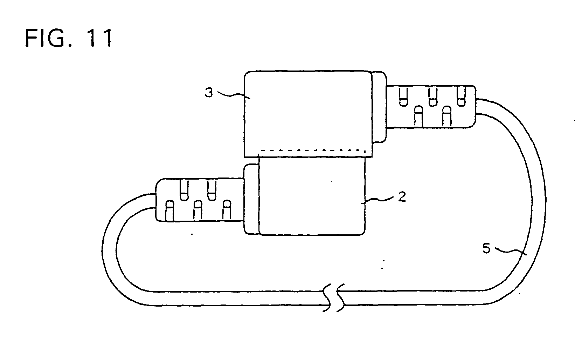

According to this construction, when the cords 5 are carried, as shown in Fig. 11, in case the magnet side socket 2 and the magnetic material side socket 3 which are provided at the respective ends of the cord 5 are connected together, magnetic force generated from the magnet side socket 2 forms a closed magnetic circuit within the magnet connector. Thus, since lines of magnetic force are not exposed to the outside, even if the cord 5 is accommodated together with a magnetic card, the magnetic effect on the magnetic card by the cord 5 can be reduced.

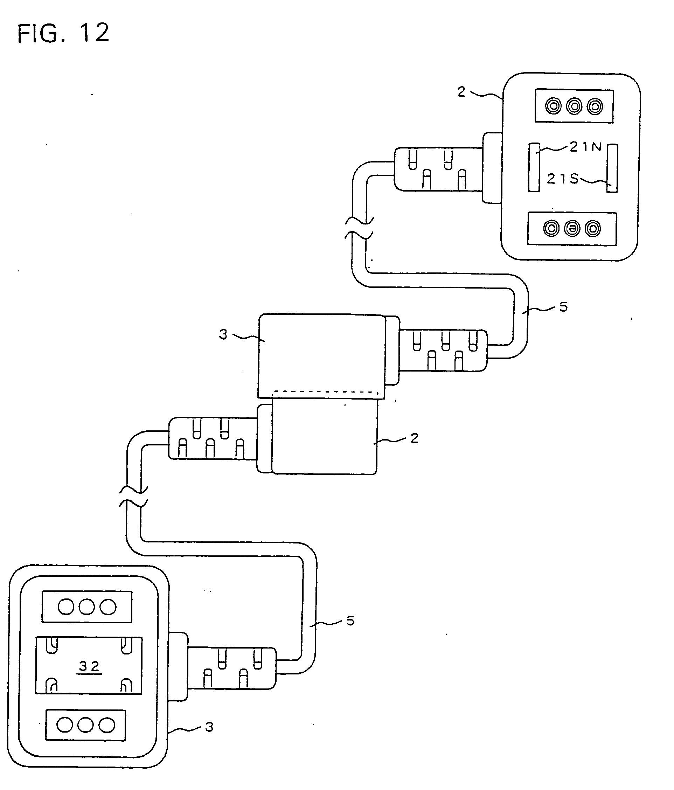

Furthermore, as has been described above, since the magnet side socket 2 and the magnetic material side socket 3 are provided at the respective ends of the cord 5, respectively, as shown in Fig. 12, a plurality of cords 5 can be connected in a series fashion, whereby the cords can be prolonged.

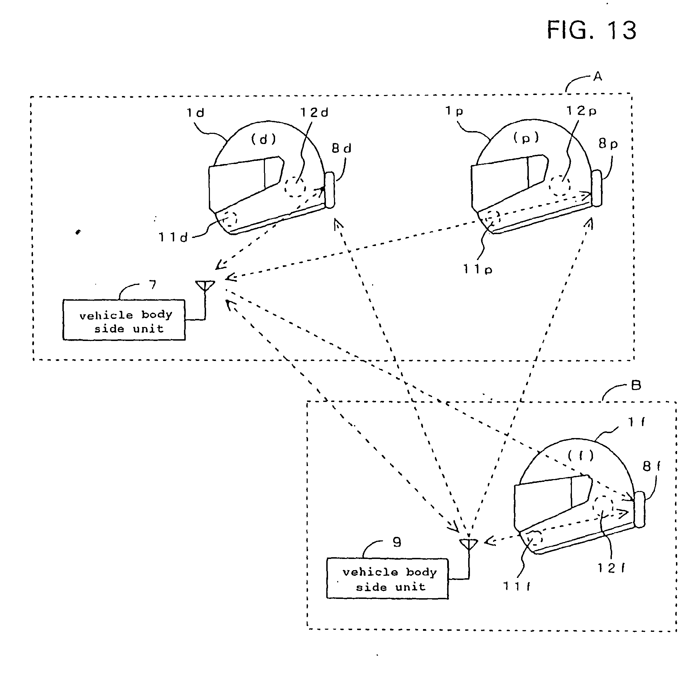

Next, an example will be descried in which the invention is applied to a vehicle radio communication system. Fig. 13 is a typical view illustrating a communication mode in a vehicle radio communication system to which the invention is applied, in which like reference numerals to those previously described denote like or equivalent portions to those previously described. Here, an example will be described in which communication is made among three people riding on two separate vehicles A, B.

A microphone 11, a speaker 12 and a radio wave type radio communication unit 8 are mounted in a helmet 1 worn by each of the riding people. The radio communication unit 8 is attached to a central portion on the rear of the helmet 1 via a detachable fixing member. Provided, respectively, on the vehicles A, B are vehicle body side units 7, 9 for use in radio communication with the respective radio communication units 8.

In the construction described above, in a case where the riding people on the vehicle A, that is, the driver (d) and the passenger (p) try to communicate with each other, for example, the voice of the driver is detected by the microphone 11d and is then converted into a voice signal for transfer to the radio communication unit 8d. The radio communication unit 8d of the driver communicates directly or indirectly via the vehicle body side unit 7 on his or her own vehicle with a radio wave type radio communication unit 8p of the passenger.

In a case where the riding people on the vehicle A communicates with the riding person (f) on the vehicle B, for example, radio wave sent out from the radio communication unit of the driver on the vehicle A is received by the vehicle side unit 7 on his or her own vehicle, where the radio wave is amplified and re-sent out. The radio wave sent out from the vehicle body side unit 7 is received by the radio wave type radio transmitter-receiver unit 8p of the passenger, as well as by the radio communication unit 8f of the driver of the vehicle B, and the radio wave so received is then reproduced from the speaker 12f.

The radio wave sent out from the radio communication unit 8f of the driver of the vehicle B is received by the vehicle side unit 9 on his or her own vehicle, where the radio wave so received is amplified and re-sent out. The radio wave sent out from the vehicle side unit 9 is received at the respective radio communication units 8d, 8p of the driver and the passenger on the vehicle A and is then reproduced from the speakers 12d, 12p.

Note that in addition to the communication mode described above, all the communications made between the vehicles A, B may be implemented via the vehicle side units 7, 9, and in this case, the voice of the driver of the vehicle B is transmitted to the driver (the radio communication unit 8d) and the passenger (the radio communication unit 8p) on the vehicle A by way of the radio communication unit 8, the vehicle side unit 9 and the same unit 7.

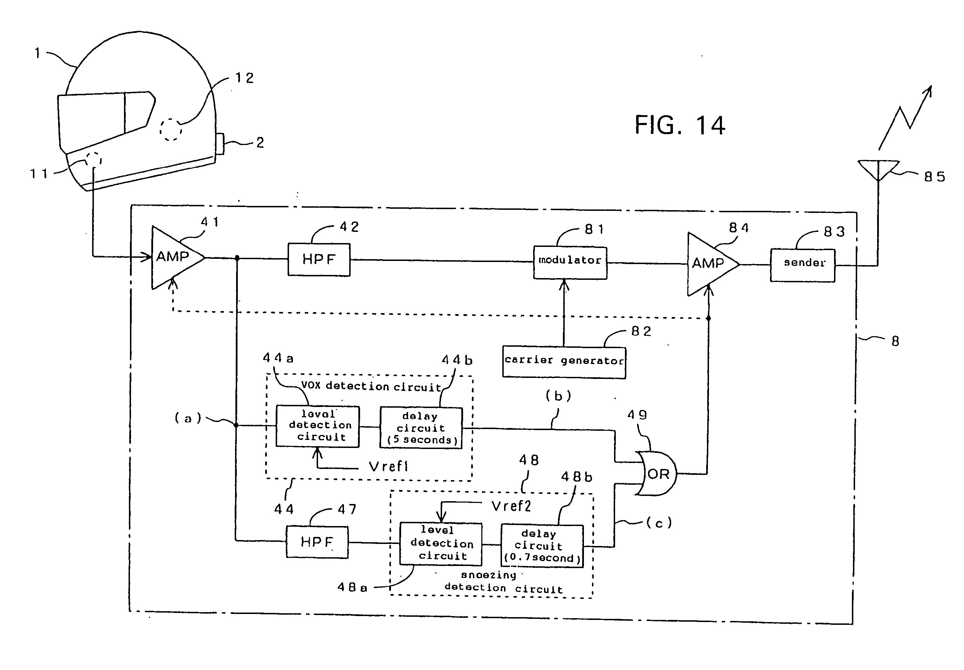

Fig. 14 is a block diagram illustrating the construction of a main part of the radio communication unit 8, and like reference numerals to those described previously denote like or equivalent portions to those described previously. The communication units 8 used in this embodiment are also provided with the function to prevent the transmission of relatively loud physiological noise such as sneezing or coughing noise to the speech communication partners.

A microphone amplifier 41 amplifies a voice signal detected by the microphone 11 mounted in the helmet 1 and outputs the voice signal so amplified. Low frequency constituents of an output signal from the microphone amplifier 41 are removed or attenuated by a high pass filer (HPL) 42, and thereafter the output signal so processed then enters a modulator 81. The modulator 81 modulates a carrier signal outputted from a carrier generator 82 with the output signal from the HPL 42 and then outputs the modulated signal to a power amplifier 84. The modulated signal which has been amplified at the power amplifier 84 is propagated to from an antenna 85 via a sender 83. The power amplifier 84 is provided with a muting terminal and when a control signal of an "H" level is inputted in the muting terminal, an output signal from the power amplifier 84 is attenuated or cut off.

A VOX detection circuit 44 makes an output signal become an "L" level, as similarly to the previous example, when a signal equal to or above a reference value Vref1 is detected by a level detection circuit 44a, and even after a signal equal to or above the reference value Vref1 is detected any more the VOX detection circuit maintains the "L" level for 5 seconds.

A sneezing detection circuit 48 makes, as similarly to the previous example, an output signal become an "H" level only for 0. 7 second when a signal equal to or above a reference value Vref2 is detected by a level detection circuit 48a. An OR circuit 49 outputs a theoretical sum of the output signal from the VOX detection circuit 44 and the output signal from the sneezing detection circuit 48 to the muting terminal of the power amplifier 84 as a control signal.

In this embodiment, the reproduction of physiological noise such as sneezing or coughing noise from the speaker can be prevented as well with an extremely simple construction.

Note that while the above embodiment is described such that the gain of the power amplifier 84 is controlled with the output signal of the OR circuit 49, the gain of the microphone amplifier 41 of the input stage is restricted so that only the carrier signal is sent out from the modulator 81. Alternatively, it may be constructed such that the supply of the carrier signal from the carrier generator 82 to the modulator 81 is restricted.

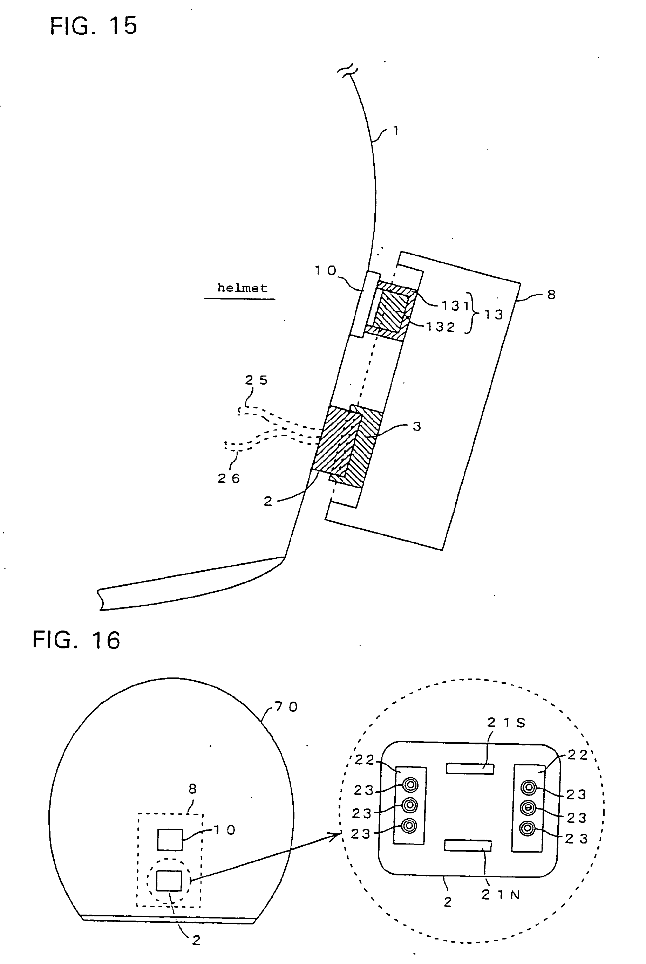

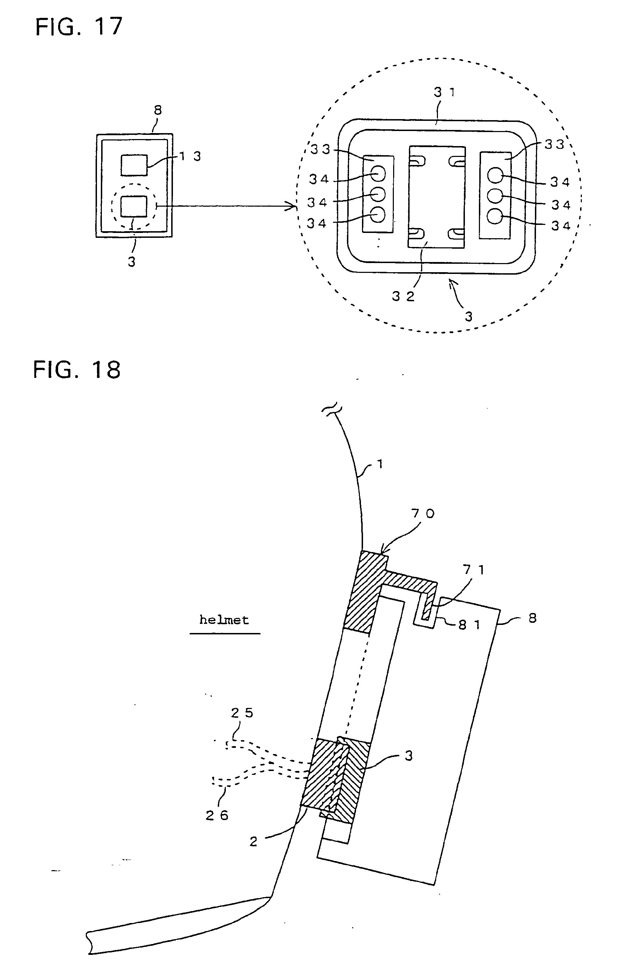

Fig. 15 is a side cross-sectional view showing a method for attaching the radio communication unit 8 to the helmet 1 according to the embodiment, Fig. 16 is a rear view of the helmet with the radio communication unit 8 being not attached thereto, and Fig. 17 is a plan view of a main surface of the radio communication unit 8 which faces the helmet.

As shown in Fig. 16, an iron plate 10 as a magnetic material plate and a magnet side socket 2 of the magnet connector are fixedly attached to a depressed location in the rear of the helmet at a predetermined vertical interval. It is preferable to apply to an exposed portion of the iron plate 10 a paint whose color is identical to that of the helmet 1.

As shown on the right hand side of the figure in an enlarged fashion, provided on a connecting surface of the magnet side socket 2 are an S pole iron piece 21S, an N pole iron piece 21N and a plurality of electrodes 23 that are exposed at a bottom portion of a depression 22. The respective electrodes 23 are connected to the microphone 11 and the speaker 12 via lead wires 25, 26.

As shown in Fig. 17, fixedly attached to the main surface of the radio communication unit 8 that faces the helmet at a predetermined vertical interval are a magnet which constitutes a pair of magnet connector together with the iron plate 10 and a magnetic material side socket 3 which constitutes a pair of magnet connector together with the magnet side socket 2. As shown in Fig. 15, the magnet 13 is constituted by a permanent magnet 132 and a magnet core 131 which covers the sides and back of the permanent magnet, whereby the magnet force of the permanent magnet is entirely applied to the iron plate 10 on the helmet.

As shown on the right hand side of Fig. 17 in an enlarged fashion, provided on a connecting surface of the magnetic material side socket 3 are an annular rib 31 provided along the periphery of the connecting surface in such a manner as to erect therefrom, a magnetic material plate 32 fixedly attached to a bottom portion thereof and an electrode 34 exposed on a land-like portion 33 that rises from the bottom portion.

In the construction as described above, when attaching the radio communication unit 8 to the helmet 1, the magnet side socket 2 of the helmet 1 is fitted in the annular rib 31 on the magnetic material side socket 3, and both the socket and the rib are aligned with each other such that both are drawn to each other by virtue of magnetism for fixation.

As this occurs, the relative positional relationship between the helmet 1 and the radio communication unit 8, in particular, the angle in a torsional direction is regulated by the annular rib 31 on the magnetic material side socket 3, whereby the magnet side socket 2 and the magnetic material side socket 3 can hold a desired positional relationship therebetween. Furthermore, as a result, the positional relationship between the iron plate 10 on the helmet and the magnet 13 on the radio communication unit 8 is also held in a predetermined relationship, whereby both the iron plate and the magnet can be connected together magnetically.

According to this embodiment, the helmet 1 and the radio communication unit 8 are fixed to each other magnetically, and only the thin, small and flat iron plate 10 and the socket 2 made to look highly functional are allowed to be exposed on the surface of the helmet 1 with the radio communication unit 8 not being attached thereto, neither an adhesive tape nor a metal fixture being exposed thereon. Consequently, the good external appearance of the helmet is deteriorated in no way, and moreover, the handling of the helmet when carrying the same can be facilitated.

In addition, according to the embodiment, the helmet 1 and the radio communication unit 8 are connected to each other magnetically at two locations, whereby the radio communication unit 8 can be simply and rigidly secured to the helmet 1. Furthermore, the electric connection between the helmet and the radio communication machine is maintained through the magnet contact which is highly reliable, whereby the reliable connection is made possible.

Note that while the above embodiment is described such that the magnet 13 acting as the magnet connector is constituted by the permanent magnet 132 and the magnet core 131, a highly flexible plastic magnet or resin magnet may be employed instead.

Fig. 18 is a side cross-sectional view illustrating a method for attaching the radio communication unit 8 to the helmet according to a second embodiment, in which like reference numerals to those described previously denote like or equivalent portions to those described previously.

According to the embodiment, instead of using the magnet connector comprising the iron plate 10 and the magnet 13 a resin clamper 70 is fixedly attached to the helmet 1. When wearing the helmet, firstly a pawl portion 71 of the resin clamper 70 is inserted into an engagement hole 81 formed in a side of the radio communication unit 8, and thereafter the magnet side socket 2 and the magnetic material side socket 3 are connected together.

According to the embodiment, with the radio communication unit 8 not being attached to the helmet 1, since the resin clamper 70 is exposed on the surface thereof, when carrying the helmet 1, slightly more care is needed when compared to the first embodiment. However, sine a connector such as an adhesive tape which would deteriorate the good external appearance of the helmet is not allowed to be exposed on the surface, the good external appearance of the helmet is not deteriorated even with the radio communication unit not being attached thereto. Furthermore, since the resin clamper 70 is easy to be painted, in case the clamper is painted in the same color as that of the helmet 1, its existence is made less conspicuous.

According to the invention, when the excessive input signal attributed to sneezing or coughing is detected, the gain of the amplifier for amplifying the voice signal is reduced for the predetermined period of time in which the sneezing or the like is predicted to be deadened, whereby the excessive input signal is not generated substantially, thereby making it possible to realize with the simple construction the speech communication apparatus which does not transmit to the speech communication partners the uncomfortable physiological noise such as sneezing, coughing or throat-clearing noise.

In summary it is an object to provide a speech communication apparatus which is used with a microphone being fixed to a predetermined position in the vicinity of the mouth in such a manner as to prevent the transmission of uncomfortable physiological noise such as sneezing, coughing or throat-clearing noise to speech communication partners.

To achieve this, there is provided a speech communication apparatus including a speech communication microphone 11, a speaker 12 and a communication unit 4 for amplifying an output signal from the speech communication microphone, the speech communication apparatus being characterized in that the communication unit comprises an amplifying means 45p, 45d for amplifying an input signal and outputting the input signal so amplified, and a control means 48 for controlling the gain of the amplifying means 45p, 45d in response to an excessive input signal, wherein the control means 48 controls the gain of the amplifying means such that a reproduced sound of an excessive input signal is reduced to a predetermined level only for a predetermined period of time when the excessive input signal is detected.

## Claims

1. A helmet with a speech communication apparatus including a speech communication microphone (11) and a speaker (12) fitted in the helmet (1) and fixedly disposed in the vicinity of the mouth and the ear of an individual wearing the helmet (1), respectively, and a communication unit (4) for amplifying an output signal from said speech communication microphone (11), said communication unit (4) comprising:
amplifying means (45p, 45d; 84) for amplifying an input signal and outputting said input signal so amplified, and
control means (48) for controlling the gain of said amplifying means (45p, 45d; 84) in response to an excessive input signal,
said helmet being **characterized in that**:
said control means (48) controls the gain of said amplifying means (45p, 45d; 84) such that a reproduced sound of an excessive input signal is reduced to a predetermined level only for a predetermined period of time when said excessive input signal is detected.

2. A helmet with a speech communication apparatus including a speech communication microphone (11) and a speaker (12) fitted in the helmet (1) and fixedly disposed in the vicinity of the mouth and the ear of an individual wearing the helmet (1), respectively, and a communication unit (4) for amplifying an output signal from said speech communication microphone (11), said communication unit (4) comprising:
amplifying means (45p, 45d; 84) for amplifying an input signal and outputting said input signal so amplified, and
control means (48) for controlling the gain of said amplifying means (45p, 45d; 84) in response to an excessive input signal,
said helmet being **characterized in that**:
said control means controls the gain of said amplifying means (45p, 45d; 84) such that a reproduced sound of an input signal which rises sharply is reduced to a predetermined level only for a predetermined period of time when said excessive input signal is detected.

3. The helmet with a speech communication apparatus as set forth in Claim 1 or 2, further including operation means (40) for varying said predetermined period of time.

4. The helmet with a speech communication apparatus as set forth in any of Claims 1 to 3, wherein said predetermined period of time is set at a range from 0.7 to 5 seconds both inclusive.

5. The helmet with a speech communication apparatus as set forth in any of Claims 1 to 4, wherein said control means (44, 48, 49) controls the gain of said amplifying means (45p, 45d; 84) such that said amplifying means (45p, 45d; 84) is mute when said input signal remains below a predetermined level (Vref1) for a predetermined time.

6. The helmet with a speech communication apparatus as set forth in any of Claims 1 to 5, wherein said control means (44, 48, 49) controls the gain of said amplifying means (45p, 45d; 84) such that said amplifying means (45p, 45d; 84) becomes mute for a predetermined period of time when said input signal exceeds a predetermined level (Vref2).

## Patentansprüche

1. Helm mit einer Sprachkommunikationseinrichtung, umfassend ein Sprachkommunikationsmikrofon (11) und einen Lautsprecher (12), welche in den Helm (1) eingebaut sind und jeweils fest in der Nähe des Munds und des Ohrs einer den Helm (1) tragenden Person angeordnet sind, und eine Kommunikationseinheit (4), um ein Ausgangssignal von dem Sprachkommunikationsmikrofon (11) zu verstärken, wobei die Kommunikationseinheit (4) umfasst:
ein Verstärkermittel (45p, 45d; 84), um ein Eingangssignal zu verstärken und das so verstärkte Eingangssignal auszugeben, und
ein Steuer/Regelmittel (48), um die Verstärkung des Verstärkermittels (45p, 45d; 84) in Reaktion auf ein übermäßiges Eingangssignal zu steuern/regeln,
wobei der Helm **dadurch gekennzeichnet ist, dass**:
das Steuer/Regelmittel (48) die Verstärkung des Verstärkermittels (45p, 45d; 84) derart steuert/regelt, dass ein wiedergegebener Ton eines übermäßigen Eingangssignals nur für eine vorbestimmte Zeitspanne auf ein vorbestimmtes Niveau reduziert wird, wenn das übermäßige Eingangssignal erfasst wird.

2. Helm mit einer Sprachkommunikationseinrichtung, umfassend ein Sprachkommunikationsmikrofon (11) und einen Lautsprecher (12), welche in den Helm (1) eingebaut sind und jeweils fest in der Nähe des Munds und des Ohrs einer den Helm (1) tragenden Person angeordnet sind, und eine Kommunikationseinheit (4), um ein Ausgangssignal von dem Sprachkommunikationsmikrofon (11) zu verstärken, wobei die Kommunikationseinheit (4) umfasst:
ein Verstärkermittel (45p, 45d; 84), um ein Eingangssignal zu verstärken und das so verstärkte Eingangssignal auszugeben, und
ein Steuer/Regelmittel (48), um die Verstärkung des Verstärkermittels (45p, 45d; 84) in Reaktion auf ein übermäßiges Eingangssignal zu steuern/regeln, wobei der Helm **dadurch gekennzeichnet ist, dass**:
das Steuer/Regelmittel die Verstärkung des Verstärkermittels (45p, 45d; 84) derart steuert/regelt, dass ein wiedergegebener Ton eines scharf ansteigenden Eingangssignals nur für eine vorbestimmte Zeitspanne auf ein vorbestimmtes Niveau reduziert wird, wenn das übermäßige Eingangssignal erfasst wird.

3. Helm mit einer Sprachkommunikationseinrichtung nach Anspruch 1 oder 2, ferner umfassend ein Bedienungsmittel (40), um die vorbestimmte Zeitspanne zu verändern.

4. Helm mit einer Sprachkommunikationseinrichtung nach einem der Ansprüche 1 bis 3, wobei die vorbestimmte Zeitspanne als ein Bereich von einschließlich 0,7 bis einschließlich 5 Sekunden eingestellt ist.

5. Helm mit einer Sprachkommunikationseinrichtung nach einem der Ansprüche 1 bis 4, wobei das Steuer/Regelmittel (44, 48, 49) die Verstärkung des Verstärkermittels (45p, 45d; 84) derart steuert/regelt, dass das Verstärkermittel (45p, 45d; 84) stummgeschaltet ist, wenn das Eingangssignal eine vorbestimmte Zeit unter einem vorbestimmten Niveau (Vref1) bleibt.

6. Helm mit einer Sprachkommunikationseinrichtung nach einem der Ansprüche 1 bis 5, wobei das Steuer/Regelmittel (44, 48, 49) die Verstärkung des Verstärkermittels (45p, 45d; 84) derart steuert/regelt, dass das Verstärkermittel (45p, 45d; 84) für eine vorbestimmte Zeitspanne stummgeschaltet wird, wenn das Eingangssignal ein vorbestimmtes Niveau (Vref2) übersteigt.

## Revendications

1. Casque muni d'un dispositif de communication vocale incluant un microphone de communication vocale (11) et un haut-parleur (12) montés dans le casque (1) et respectivement fixés au voisinage de la bouche et de l'oreille d'un individu portant le casque (1), et une unité de communication (4) destinée à amplifier un signal de sortie issu dudit microphone de communication vocale (11), ladite unité de communication (4) comprenant :
des moyens d'amplification (45p, 45d ; 84) pour amplifier un signal d'entrée et délivrer ledit signal d'entrée ainsi amplifié, et
des moyens de commande (48) pour commander le gain desdits moyens d'amplification (45p, 45d ; 84) en réponse à un signal d'entrée excessif,
ledit casque étant **caractérisé en ce que** :
lesdits moyens de commande (48) pour commander le gain desdits moyens d'amplification (45p, 45d ; 84) de telle manière qu'un son reproduit d'un signal d'entrée excessif est réduit à un niveau prédéterminé, uniquement pendant une période de temps prédéterminée, lorsque ledit signal d'entrée excessif est détecté.

2. Casque muni d'un dispositif de communication vocale incluant un microphone de communication vocale (11) et un haut-parleur (12) montés dans le casque (1) et disposés fixement au voisinage de la bouche et de l'oreille d'un individu portant le casque (1), respectivement, et une unité de communication (4) destinée à amplifier un signal de sortie issu dudit microphone de communication vocale (11), ladite unité de communication (4) comprenant :
des moyens d'amplification (45p, 45d ; 84) pour amplifier un signal d'entrée et délivrer ledit signal d'entrée ainsi amplifié, et
des moyens de commande (48) pour commander le gain desdits moyens d'amplification (45p, 45d ; 84) en réponse à un signal d'entrée excessif,
ledit casque étant **caractérisé en ce que** :
lesdits moyens de commande commandent le gain desdits moyens d'amplification (45p, 45d ; 84) de telle manière qu'un son reproduit d'un signal d'entrée qui s'élève brusquement est réduit à un niveau prédéterminé, uniquement pendant une période de temps prédéterminée, lorsque ledit signal d'entrée excessif est détecté.

3. Casque muni d'un dispositif de communication vocale selon la revendication 1 ou 2, incluant, en outre, des moyens d'actionnement (40) pour faire varier ladite période de temps prédéterminée.

4. Casque muni d'un dispositif de communication vocale selon l'une quelconque des revendications 1 à 3, dans lequel ladite période de temps prédéterminée est fixée dans un intervalle allant de 0,7 à 5 secondes, ces deux valeurs étant incluses.

5. Casque muni d'un dispositif de communication vocale selon l'une quelconque des revendications 1 à 4, dans lequel lesdits moyens de commande (48, 49, 50) commandent le gain desdits moyens d'amplification (45p, 45d ; 84) de telle manière que lesdits moyens d'amplification (45p, 45d ; 84) deviennent muets lorsque ledit signal d'entrée demeure au-dessous d'un niveau prédéterminé (Vref1) pendant une période de temps prédéterminée.

6. Casque muni d'un dispositif de communication vocale selon l'une quelconque des revendications 1 à 5, dans lequel lesdits moyens de commande (48, 49, 50) commandent le gain desdits moyens d'amplification (45p, 45d ; 84) de telle manière que lesdits moyens d'amplification (45p, 45d ; 84) deviennent muets pendant une période de temps prédéterminée lorsque ledit signal d'entrée dépasse un niveau prédéterminé (Vref2).
